# EUROPÄISCHE PATENTSCHRIFT

(11) **EP 2 662 228 B1**
(45) Veröffentlichungstag und Bekanntmachung des Hinweises auf die Patenterteilung: **08.04.2015**
(21) Anmeldenummer: 13000623.2
(22) Anmeldetag: 07.02.2013
(51) Int. Cl.: B60G 17/052, B62D 61/12

(54) **Luftfederung eines Nutzfahrzeugs mit Achslastumschaltung zwischen Hinterachse und Vor- oder Nachlaufachse**
Pneumatic suspension of a commercial vehicle with axle load switching between rear axle and leading or trailing axle
Ressort pneumatique d'un véhicule utilitaire avec commutation de charge d'essieu entre l'essieu arrière et l'essieu avant ou l'essieu entraîné

(30) Priorität: 11.05.2012 DE 102012009383
(43) Veröffentlichungstag der Anmeldung: 13.11.2013
(73) Patentinhaber: MAN Truck & Bus AG, 80995 München (DE)
(72) Erfinder: Uhl, Walter, 3711 Gr. Meiseldorf (AT); Zimmer, Martin, 81667 München (DE)

(56) Entgegenhaltungen:
- EP-A1- 0 411 352
- EP-A2- 1 108 570
- DE-A1- 4 317 847
- DE-A1- 19 530 260
- DE-A1- 19 801 546

## Beschreibung

Die Erfindung betrifft die Luftfederung eines Nutzfahrzeugs, das über eine luftgefederte, angetriebene Hinterachse und eine dieser zugeordnete Vor- und / oder Nachlaufachse verfügt. Die Achsen weisen jeweils wenigstens einen Druckluftkreis mit zumindest einem Luftfederbalg auf, wobei zumindest ein Druckschalter zur Erfassung eines Balgdrucks an der angetriebenen Hinterachse und wenigstens ein der Hinterachse zugeordnetes pneumatisch über eine Steuerleitung schaltbares Wechselventil vorgesehen sind. An das Wechselventil ist wiederum ein 3/2-Wegeventil der Hinterachse angeschlossen und ferner eine Steuereinheit vorgesehen und derart ausgeführt, dass in Abhängigkeit des erfassten Balgdrucks ein Achslastverhältnis zwischen angetriebener Hinterachse und dieser zugeordneten Vor- und / oder Nachlaufachse veränderbar ist.

Luftfederungen kommen heutzutage vielfach bei Nutzfahrzeugen, insbesondere bei schweren Lastkraftwagen sowie Omnibussen, zum Einsatz. Wesentliche Vorteile derartiger Luftfederungen bestehen in der ruhigen und komfortablen Fahrweise, sowie der variabel einstellbaren Fahrzeughöhe, was vor allem bei Nutzfahrzeugen für die Aufnahme und das Absetzen von Wechselbehältern, sogenannten Wechselbrücken, benötigt wird. In diesem Zusammenhang sind sowohl vollluftgefederte als auch teilluftgefederte Fahrzeuge bekannt. Während bei einem volluftgefederten Fahrzeug alle Achsen über Luftfedern verfügen, sind bei teilluftgefederten Fahrzeugen nicht alle Achsen luftgefedert.

Die Erfindung betrifft Nutzfahrzeuge, die über wenigstens drei Achsen verfügen, von denen eine als angetriebene Achse, üblicherweise als angetriebene Hinterachse, und die andere als eine dieser zugeordnete Vor- und / oder Nachlaufachse ausgeführt ist. Je nach Belastung der einzelnen Achsen, die im Wesentlichen vom Beladungszustand des Fahrzeugs abhängt, wirkt auf die Achsen eine Gewichtskraft, die im Allgemeinen als Achslast bezeichnet wird. Die zulässigen Achslasten sind vom Gesetzgeber für die verschiedenen Achsen vorgegeben. So beträgt die in Deutschland gesetzlich zulässige Achslast zurzeit für angetriebene Einzelachsen 11,5 t und für Doppelachsaggregate 19 t, also 9,5 t je Achse. Die gesetzlich zulässigen Achslasten weichen allerdings teilweise von den technisch zulässigen Achslasten ab.

Im Gegensatz zu den angetriebenen Einzelachsen bzw. Doppelachsaggregaten sind bei der Vor- bzw. Nachlaufachse die gesetzlich zulässigen Einzelachslasten in der Regel identisch mit der technisch zulässigen Einzelachslast. Wird nunmehr bei der Fahrzeugzulassung die Luftfederung unter Berücksichtigung der technisch zulässigen Achslasten ausgelegt, so hat dies den Nachteil, dass das fest vorgegebene Achslastverhältnis von Hinterachslast zu Vor- bzw. Nachlaufachslast auf die gesetzlich zulässige Höchstlast der Hinterachslast bezogen werden muss. Hierdurch ergibt sich aufgrund des festen Achslastverhältnisses eine Reduzierung der zulässigen Vor- bzw. Nachlaufachslast. Eine derartige Reduzierung der zulässigen Achslasten würde wiederum eine Reduzierung der maximal möglichen Zuladung aufgrund der geringeren zulässigen Achslast an der Vor- bzw. Nachlaufachse zur Folge. Aufgrund des beschriebenen Effektes kommt es teilweise vor, dass Nutzfahrzeuge, deren Fahrgestelle generell mit 26 t zulassungsfähig wären, nur mit 25 t zugelassen werden. Da gerade bei Nutzfahrzeugen der wirtschaftliche Betrieb der Fahrzeuge im Vordergrund steht und somit ein größtmöglicher Auslastungsgrad erzielt werden soll, besteht ein Bedarf für eine Regelung der Luftfederungen, so dass stets größtmögliche Achslasten realisierbar sind.

Aus dem Stand der Technik sind einerseits Luftfederungen bekannt, bei denen das zwischen angetriebener Hinterachse und Vor- bzw. Nachlaufachse gewünschte Achslastverhältnis durch unterschiedliche Luftfederbalg-Größen realisiert wird. Dieses Achslastverhältnis wiederum ist durch die Größe der jeweils gewählten Luftfederbälge vorgegeben und somit nicht veränderbar. Derart fest vorgegebene Achslastverhältnisse haben den Nachteil, dass die Luftfederung eines Nutzfahrzeugs jeweils entweder nach den gesetzlichen Vorschriften oder nach technischen Kriterien ausgelegt werden kann. Eine Zulassung des Fahrzeugs ist jedoch stets ausschließlich auf der Grundlage der gesetzlichen Vorgaben möglich.

Um das zuvor geschilderte Problem zu lösen, ist aus der EP 1 108 570 A2 eine Luftfederung eines Nutzfahrzeugs bekannt, bei dem die Größe der je Achsseite vorgesehenen Luftfederbälge der Hinterachse und die Größe der Luftfederbälge der Vor- bzw. Nachlaufachse entsprechend der jeweils technisch zulässigen und somit in der Regel größeren Achslast ausgelegt werden. In Ergänzung hierzu ist eine Vorrichtung zum automatischen Umschalten zwischen gesetzlichem und technischem Achslastverhältnis vorgesehen. Die Umschaltung zwischen gesetzlichem und technischem Achslastverhältnis erfolgt automatisch in Abhängigkeit bestimmter in einer Steuereinheit hinterlegter Kriterien. Wesentliche Bauteile des beschriebenen Luftfederungssystems, die die automatische Achslastumschaltung gewährleisten, sind ein Druckschalter zur Erfassung eines Balgdrucks an der angetriebenen Hinterachse sowie zwischen einer Volldurchlassstellung und einer Druckreduzierstellung umschaltbare Druckverhältnisventile je Luftfederkreis der Hinterachse. Die beiden Druckverhältnisventile sind bis zum Erreichen eines Beladungszustandes des Fahrzeugs, der der gesetzlich zulässigen Achslast an der Hinterachse entspricht, in ihre Druckreduzierstellung geschaltet. Aufgrund des reduzierten Drucks in den Hinterachs-Luftfederbälgen sowie des vorgeschriebenen Achslastverhältnisses von 1,15 herrscht in den Luftfederbälgen einer Vor- oder Nachlaufachse ein erhöhter Balgdruck. Bei Erreichen der vorgegebenen gesetzlich zulässigen Hinterachslast erfolgt eine Umschaltung der beiden Druckverhältnisventile an der Hinterachse, in deren Volldurchlassstellung, so dass sich nunmehr das technische Achslastverhältnis zwischen Hinterachslast und Vor- bzw. Nachlaufachse aufgrund gleicher Drücke in den Luftfederbälgen einstellt.

Die beiden Druckverhältnisventile sind mit Hilfe eines Druckluftsignals aus einer Steuerleitung umschaltbar. Hierfür sind die Druckverhältnisventile mit ihren Schalteingängen am gemeinsamen Druckluftschaltventil angeschlossen. Dieses Druckluftschaltventil ist bei Erreichen der gesetzlich zulässigen Hinterachslast durch das vom Drucksensor initiierte Signal aktivierbar und lässt dann das Zuführen von Schaltluft über die Steuerleitung zu den beiden Druckluftverhältnisventilen zu. Hierdurch wird synchron von der Druckreduzierstellung in die Volldurchlaststellung umgeschaltet.

Ausgehend von den aus dem Stand der Technik bekannten technischen Lösungen, insbesondere der bekannten, automatischen Achslastumschaltung bei Nutzfahrzeugen mit Luftfederung, liegt der Erfindung die Aufgabe zugrunde, die Luftfederung eines Nutzfahrzeugs mit angetriebener Hinterachse sowie einer Vor- und / oder Nachlaufachse derart weiterzubilden, dass die Schaltung der beiden an der angetriebenen Hinterachse vorgesehenen, üblicherweise als 3/2-Wegeventile ausgeführten Druckverhältnisventile vereinfacht wird und gleichzeitig ein sicherer Betriebszustand der Luftfederung auch bei Ausschaltung des Nutzfahrzeugs gewährleistet wird. Eine ordnungsgemäße Achslastumschaltung soll hierbei mit vergleichsweise einfachen und kostengünstigen Mittel realisiert werden. Die grundsätzliche Funktionalität gegenüber den bekannten automatischen Achslastumschaltungen soll weiterhin nicht negativ beeinflusst werden.

Die vorstehende Aufgabe wird mit Hilfe einer Luftfederung gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist eine Luftfederung eines Nutzfahrzeugs, das über eine luftgefederte, angetriebene Hinterachse und eine dieser zugeordnete Vor- und / oder Nachlaufachse verfügt, die jeweils wenigstens einen Druckluftkreis mit zumindest einem Luftfederbalg aufweisen, wobei zumindest ein Druckschalter zur Erfassung eines Balgdrucks an der angetriebenen Hinterachse, wenigstens ein der Hinterachse zugeordnetes pneumatisches über eine Steuerleitung schaltbares Wechselventil, an das wiederum wenigstens ein 3/2-Wegeventil der Hinterachse angeschlossen ist, sowie eine Steuereinheit vorgesehen und derart ausgeführt sind, dass in Abhängigkeit des erfassten Balgdrucks ein Achslastverhältnis zwischen angetriebener Hinterachse und dieser zugeordneten Vor- und / oder Nachlaufachse veränderbar ist, derart weitergebildet worden, dass an die Steuerleitung des Wechselventils zwei Magnetventile parallel angeschlossen sind, die durch mit elektrischer Energie versorgbare Wechselrelais in Abhängigkeit des an der Hinterachse erfassten Balgdrucks derart schaltbar sind, dass durch einen Schaltvorgang die Steuerleitung be- oder entlüftbar ist.

Mit einer erfindungsgemäß ausgeführten Luftfederung eines Nutzfahrzeugs mit Achslastumschaltung wird mit vergleichsweise einfachen Mitteln über das Wechselventil eine gezielte Be- oder Entlüftung der Steuerleitung des Wechselventils und somit Ansteuerung des wenigstens einen 3/2-Wegeventils der angetriebenen Hinterachse erreicht werden. Vorzugsweise sind an der angetriebenen Hinterachse zwei über das Wechselventil synchron schaltbare 3/2-Wegeventile vorgesehen, über die bedarfsangepasst jeweils ein Druckverhältnisventil mit Druckluft versorgt oder strömungstechnisch umgangen wird. Erfindungswesentlich hierbei ist, dass an die Steuerleitung des Wechselventils zwei Magnetventile parallel angeschlossen sind, die jeweils derart über das Relais bestromt werden, dass die Steuerleitung des Wechselventils gezielt be- oder entlüftet wird.

Unter einem Druckschalter wird im Zusammenhang mit der Erfindung allgemein ein mechanischer oder elektronischer Schalter verstanden, der durch Druckänderungen im Druckluftkreis betätigt wird. Gemäß einer speziellen Weiterbildung ist es denkbar, dass der Druckschalter als Drucksensor mit nachgeschalteter Elektronik ausgeführt ist. Diese Ausführungsform bietet insbesondere den Vorteil, dass der Schaltpunkt des Druckschalters beliebig programmierbar ist.

In einer bevorzugten Ausführungsform der Erfindung ist eines der beiden Magnetventile an einen Vorratsdruckluftkreis des Nutzfahrzeugs angeschlossen und kann vorzugsweise derart geschaltet werden, dass eine Verbindung zwischen dem Vorratsdruckluftkreis und der Steuerleitung des Wechselventils und über dieses mit wenigstens einem der als 3/2-Wegeventile ausgeführten Druckverhältnisventile herstellbar ist.

Auf bevorzugte Weise wird hierbei die Verbindung zwischen den Vorratsdruckluftkreis und der Steuerleitung hergestellt, sobald das Magnetventil über das Wechselrelais mit elektrischer Energie versorgt wird, also bestromt ist. Wird dagegen das Wechselrelais derart geschaltet, dass das Magnetventil nicht mit elektrischer Energie versorgt, also stromlos ist, so besteht über das Wechselventil keine Verbindung zwischen dem Druckluftvorratskreis und der Steuerleitung des Wechselventils und/oder dem wenigstens einen 3/2-Wegeventil.

Gemäß einer anderen Ausführungsform der Erfindung ist eines der beiden Magnetventile ferner derart mit der Steuerleitung des Wechselventils verbunden, dass die Steuerleitung über dieses Magnetventil entlüftet werden kann. Eine Entlüftung der Steuerleitung erfolgt hierbei vorzugsweise dann, wenn das Magnetventil über das Wechselrelais mit elektrischer Energie versorgt wird, also sich in einem bestromten Zustand befindet. Eine Entlüftung der Steuerleitung des Wechselventils über das zweite Magnetventil erfolgt hierbei vorzugsweise dann, wenn die Steuerleitung nicht mit dem Vorratsdruckluftkreis verbunden ist, um so eine Entlüftung des Vorratsdruckluftkreises zuverlässig zu vermeiden.

Gemäß einer speziellen Ausführungsform der Erfindung ist es denkbar, dass die beiden Magnetventile, die über das Wechselrelais wahlweise mit elektrischer Energie versorgbar sind, derart geschaltet werden, dass, sobald die Zündung des Nutzfahrzeugs ausgeschaltet wird und somit keine elektrische Energie mehr bereitgestellt wird, sowohl keine Verbindung zwischen den Vorratsdruckluftkreis und der Steuerleitung hergestellt ist und auch die Steuerleitung nicht entlüftet wird. Wird die Zündung eines Nutzfahrzeugs ausgeschaltet und hierdurch beide Magnetventile in einen stromlosen Zustand versetzt, so wird auf diese bevorzugte Weise der in der Steuerleitung zu diesem Zeitpunkt herrschende Druck "eingeschlossen". Je nach Betriebszustand, in dem sich das Fahrzeug bei der Außerbetriebnahme befindet, herrscht in der Steuerleitung der Vorratsdruck oder aber die Steuerleitung ist entlüftet.

Vorteilhafterweise erfolgt die Achslastumschaltung auf der Grundlage der erfindungsgemäßen Anordnung zweier Magnetventile, die über ein Wechselrelais bedarfsgerechnet mit elektrischer Energie versorgt werden, bei einer in der Steuereinheit hinterlegten maximalen Achslast der angetriebenen Hinterachse. In einer speziellen Ausführungsform der Erfindung wird dieser Wert in der Steuerung auf 10 t festgesetzt. Sobald an der angetriebenen Hinterachse eine Achslast von 10 t erreicht wird, wird der Druck in den an dieser Achse vorgesehenen Luftfederbälge von einem reduzierten Niveau auf das maximale Druckniveau angehoben. Hierdurch wird sichergestellt, dass das Achslastverhältnis zwischen der luftgefederten angetriebenen Hinterachse und der dieser zugeordneten Vor- bzw. Nachlaufachse auf den gesetzlich vorgegebenen Wert eingestellt wird. Eine Umschaltung von einem reduzierten auf ein angehobenes Druckniveau erfolgt hierbei, indem der in der Steuerleitung des Wechselventils herrschende Druck zur Ansteuerung des 3/2-Wegeventils durchgeschaltet wird. Daraufhin wird das wenigstens eine 3/2-Wegeventil aus einer Druckreduzierstellung in eine Volldurchlassstellung umgeschaltet. In der Volldurchlassstellung ist das 3/2-Wegeventil auf bevorzugte Weise derart geschaltet, dass ein strömungstechnisch in Reihe mit dem 3/2-Wegeventil angeordnetes Druckverhältnisventil nicht mit Druckluft versorgt sondern umgangen wird.

Eine spezielle Weiterbildung sieht ferner vor, dass mit Hilfe des Wechselventils wahlweise der in der Steuerleitung, an die die Magnetventile angeschlossen sind, herrschende Druck oder ein Steuerdruck, der bei gelifteter oder entlasteter Vorlauf- bzw. Nachlaufachse an einem zweiten Anschluss des Wechselventils anliegt, zur Ansteuerung des wenigstens einen 3/2-Wegeventils durchgeschaltet wird. Mit einer derartigen technischen Lösung ist es möglich, auch bei gelifteter oder entlasteter Vorlauf- bzw. Nachlaufachse das 3/2-Wegeventil auf eine Volldurchlassstellung umzuschalten und so ein üblicherweise vorgesehenes Druckverhältnisventil strömungstechnisch zu umgehen, also nicht mit Druckluft zu versorgen.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Figur 1:: Funktionsschaltplan für die Zusatzfunktion "Achslastumschaltung" der Luftfederung eines Nutzfahrzeugs;
- Figur 2:: Detailschaltbild der Magnetventile einer automatischen Achslastumschaltung sowie
- Figur 3:: schematische Darstellung der automatischen Achslastumschaltung bei einem luftgefederten Nutzfahrzeug.

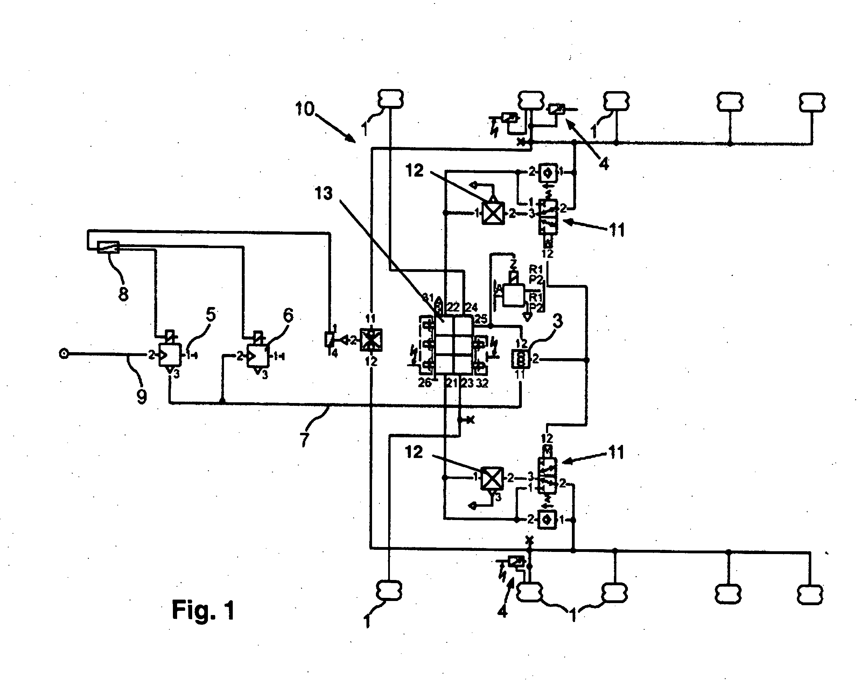

Figur 1 zeigt den Schaltplan der Zusatzfunktion Achslastumschaltung einer Nutzfahrzeugluftfederung. Mit Hilfe der dargestellten Achslastumschaltung ist es möglich, eine luftgefederte angetriebene Hinterachse mit der technisch maximal möglichen Gewichtskraft zu belasten und gleichzeitig sicherzustellen, dass ein gesetzlich vorgeschriebenes Achslastverhältnis bzw. die Achslast einer Vor- oder Nachlaufachse 10 nicht überschritten wird. Hierzu sind in Figur 1 die Druckluftversorgungskreise zur Versorgung zweier Hinterachsen sowie einer Vorlaufachse einer Schwerlastzugmaschine dargestellt.

Das dargestellte Schaltbild zeigt die Druckluftversorgung der Luftfederbälge eines angetriebenen Doppelachsaggregats mit Vorlaufachse 10, wie es beispielsweise bei Schwerlastzugmaschinen zum Einsatz kommt. Wesentlich an der beschriebenen technischen Lösung ist, dass über das Wechselventil 3 die 3/2-Wegeventile 11 während des Betriebs des Nutzfahrzeugs derart schaltbar sind, dass die Luftfederbälge 1 der Hinterachse 2 sowohl mit einem reduzierten Fülldruck als auch mit vollem Druck betrieben werden können. Die Umschaltung zwischen einem reduzierten Fülldruck und einem vollen Fülldruck erfolgt in Abhängigkeit der Achslast an der angetriebenen Hinterachse 2. In Ergänzung hierzu kann eine Umschaltung auch dann erfolgen, wenn die Vorlaufachse 10 entlastet oder geliftet wird.

Zur Initiierung einer achslastabhängigen Schaltung der 3/2-Wegeventile ist an der angetriebenen Hinterachse 2 ein Druckschalter 4 vorgesehen, in dem entsprechende lastabhängige Grenzwerte hinterlegt sind. Weiterhin sind ein erstes Magnetventil 5 sowie ein zweites Magnetventil 6 vorgesehen, die parallel an eine Steuerleitung 7 angeschlossen sind, welche das Wechselventil 3 mit Druckluft zur Ansteuerung der 3/2-Wegeventile 11 versorgt.

Die beiden Magnetventile 5, 6 werden in Abhängigkeit geeigneter Steuersignale der Steuereinheit über ein Wechselrelais 8 mit elektrischer Energie versorgt und zwar derart, dass wahlweise eines der beiden Magnetventile 5, 6 gezielt bestromt wird, so dass in Abhängigkeit des jeweiligen Betriebszustandes des Fahrzeugs gezielt ein pneumatisches Steuersignal in der Steuerleitung 7 erzeugbar ist.

Das erste Magnetventil 5 ist hierbei einerseits an eine Vorratsdruckluftversorgung 9 und andererseits an die Steuerleitung 7 des Wechselventils 3 angeschlossen. Das zweite Magnetventil 6 ist dagegen einerseits mit der Steuerleitung 7 des Wechselventils 3 und andererseits mit der Umgebung verbunden. Mit dem zweiten Magnetventil 6 ist es somit möglich, die Steuerleitung 7 des Wechselventils 3 je nach Schaltzustand des Wechselrelais 8 gezielt zu entlüften.

In einem ersten Betriebszustand der Luftfederung, bei dem sich die Achslast unterhalb eines im Druckschalter 4 hinterlegten Grenzwertes, beispielsweise 10 t befindet, wird das zweite Magnetventil 6 über das Wechselrelais mit elektrischer Energie versorgt, also bestromt, und die Steuerleitung 7 hierdurch entlüftet. Gleichzeitig ist das erste Magnetventil 5 stromlos, so dass keine Verbindung zwischen dem Vorratsdruckluftkreis 9 und der Steuerleitung 7 besteht. Die Steuerleitung 7 ist entlüftet.

In einem zweiten Betriebszustand, nämlich dann, wenn die Achslast an der angetriebenen Hinterachse den im Druckschalter 4 hinterlegten Grenzwert von etwa 10 t übersteigt, wird das Wechselrelais 8 derart geschaltet, dass das erste Magnetventil 5 mit elektrischer Energie versorgt wird. Das bestromte erste Magnetventil 5 wird daraufhin derart geschaltet, dass eine Verbindung zwischen dem Vorratsdruckluftkreis 9 und der Steuerleitung 7 des Wechselventils 3 besteht. Innerhalb der Steuerleitung 7 herrscht bei diesem Betriebszustand der auch in der Vorratsdruckluftleitung 9 herrschende Druck. Aufgrund der entsprechenden Stellung des Wechselrelais 8 wird das zweite Magnetventil 6 nicht mit elektrischer Energie versorgt und ist somit stromlos. Gegenüber der Umgebung ist die Steuerleitung 7 nunmehr am zweiten Magnetventil 6 dicht verschlossen. Der Vorratsdruck, der in der Vorratsdruckluftleitung 9 herrscht wird in diesem Betriebszustand zur Steuerleitung 7 des Wechselventils 3 durchgeschaltet. Die Steuerleitung 7 befindet sich somit in einem belüfteten Zustand. Ferner wird durch das Wechselventil 3 der in der Steuerleitung herrschende Druck zu den 3/2-Wegeventilen 11 durchgeschaltet, so dass die 3/2-Wegeventile 11 in die Volldurchlassstellung umgeschaltet und die mit diesen in Reihe geschalteten Druckverhältnisventile 12 strömungstechnisch umgangen, also nicht mit Druckluft versorgt werden. Durch die zuvor beschriebene Schaltung der Ventile wird in den Luftfederbälgen ein erhöhtes Druckniveau erreicht.

Das Wechselventil 3 verfügt einerseits über einen Anschluss für die Steuerleitung 7, an die die Magnetventile 5, 6 parallel angeschlossen sind, und andererseits über einen weiteren Anschluss, an dem beim Entlasten oder Liften der Vorlaufachse 10 ein Steuerdruck herrscht. Das Wechselventil 3 schaltet jeweils den höheren Druck, also entweder den Steuerdruck der Steuerleitung 7 oder den Steuerdruck, der bei Entlasten oder Liften der Vorlaufachse an dem weiteren Anschluss anliegt, zur Ansteuerung des 3/2-Wegeventils 11 durch. Sobald das 3/2-Wegeventil 11 dieses Steuersignal erhält, schaltet es auf eine Volldurchlassstellung um, in der das Druckverhältnisventil 12 nicht mehr mit Druckluft versorgt sondern strömungstechnisch umgangen wird. Hieraus folgt, dass auch bei einem Liften oder einer Entlastung der Vorlaufachse 10 die 3/2-Wegeventile 11 synchron über das Wechselventil 3 in ihre Volldurchlassstellung umgeschaltet werden und somit die Druckverhältnisventile 12 umgangen bzw. nicht mehr mit Druckluft versorgt werden.

Als dritter Betriebszustand wird im Folgenden der Fahrzeugzustand behandelt, bei dem sich das Nutzfahrzeug nicht im Betrieb befindet und die Zündung ausgeschaltet ist. In diesem dritten Betriebszustand wird weder das erste noch das zweite Magnetventil 5, 6 mit elektrischer Energie versorgt, so dass beide Ventile 5, 6 stromlos sind. Hierbei besteht einerseits im ersten Magnetventil 5 keine Verbindung zwischen dem Vorratsdruckluftkreis 9 und der Steuerleitung 7 des Wechselventils 3. Andererseits ist die Steuerleitung am zweiten Magnetventil 6 gegenüber der Umgebung dicht abgeschlossen.

Wie das erläuterte Ausführungsbeispiel zeigt, wird, sobald die Zündung ausgeschaltet wird, der aktuelle Zustand der Achslastumschaltung mittels eingeschlossenen Steuerdrucks in der Steuerleitung 7 quasi eingefroren. In der Steuerleitung 7 herrscht somit derjenige Druck, der auch vor Ausschalten der Zündung dort herrschte. Je nach Achslastzustand befindet sich die Steuerleitung 7 somit in be- oder entlüftetem Zustand. Wesentlich hierbei ist, dass der vor dem Ausschalten der Zündung herrschende Zustand der Steuerleitung 7, der die Einstellung des gewünschten Achslastverhältnisses sicher stellt, beibehalten wird. Das entsprechende geeignete Betriebsverhalten wird somit mit verhältnismäßig einfachen Mitteln gewährleistet.

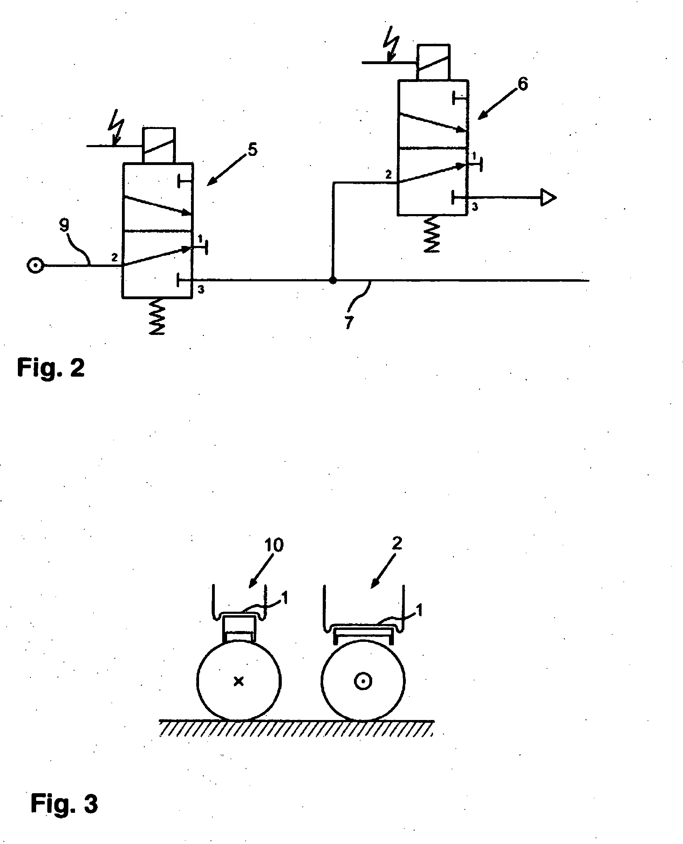

Figur 2 zeigt ein Detailschaltbild der beiden erfindungsgemäß parallel an die Steuerleitung 7 eines Wechselventils 3 und über ein Wechselrelais 8 mit elektrischer Energie versorgten Magnetventile 5, 6. Das erste Magnetventil 5 ist einerseits an den Vorratsdruckluftkreis 9 und andererseits an die Steuerleitung 7 des Wechselventils 3 angeschlossen. Sobald das erste Magnetventil 5 über das Wechselrelais 8 mit elektrischer Energie versorgt wird, wird das erste Magnetventil 5 derart geschaltet, dass eine Verbindung zwischen dem Vorratsdruckluftkreis 9 und der Steuerleitung 7 des Wechselventils 3 hergestellt und so die Steuerleitung 7 mit Druckluft gefüllt wird. Nach einem entsprechenden Schaltvorgang ist die Steuerleitung 7 des Wechselventils 3 somit belüftet.

Sofern das erste Magnetventil 5 nicht mit elektrischer Energie versorgt wird, sich also in einem stromlosen Zustand befindet, erfolgt eine Federkraft bedingte Umschaltung des Ventils, so dass der Vorratsdruckluftkreis 9 durch das erste Magnetventil 5 gegenüber der Steuerleitung 7 abgedichtet ist.

Das zweite Magnetventil 6 ist parallel zum ersten Magnetventil 5 an die Steuerleitung 7 des Wechselventils 3 angeschlossen. Mit dem zweiten Magnetventil 6 kann wahlweise eine Verbindung zwischen der Steuerleitung 7 und der Umgebung hergestellt oder die Steuerleitung 7 gegenüber der Umgebung abgedichtet werden. Entsprechend der Stellung des zweiten Magnetventils 6 kann somit die Steuerleitung 7 des Wechselventils 3 über das zweite Magnetventil 6 entlüftet werden.

Wird das zweite Magnetventil 6 über das Wechselrelais 8 mit elektrischer Energie versorgt, also bestromt, wird das Ventil 6 derart geschaltet, dass eine Verbindung zwischen der Steuerleitung 7 und der Umgebung geschaffen wird. In diesem Betriebszustand wird die Steuerleitung 7 des Wechselventils 3 über das zweite Magnetventil 6 entlüftet. Sobald das zweite Magnetventil 6 nicht über das Wechselrelais 8 mit elektrischer Energie versorgt wird, sich also in einem stromlosen Schaltzustand befindet, ist die Steuerleitung 7 gegenüber der Umgebung dicht abgeschlossen. Im stromlosen Zustand ist auch das zweite Magnetventil 6 federkraftbeaufschlagt.

Sofern sich sowohl das erste als auch das zweite Magnetventil 5, 6 im stromlosen Zustand befinden, was insbesondere dann vorkommt, wenn die Zündung des Fahrzeugs ausgeschaltet ist, ist die Steuerleitung 7 des Wechselventils 3 sowohl gegenüber der Vorratsdruckluftleitung 9 als auch der Umgebung dicht abgeschlossen. Der im Augenblick der Ausschaltung der Zündung innerhalb der Steuerleitung 7 des Wechselventils 3 herrschende Druck wird auf diese Weise aufrechterhalten bzw. eingefroren, so dass auch das zu diesem Zeitpunkt herrschende Achslastverhältnis beibehalten wird.

In Figur 3 ist schematisch die Verteilung der Achslasten auf eine luftgefederte angetriebene Hinterachse 2 sowie eine dieser zugeordneten Vorlaufachse 10 angedeutet. Die zulässige Achslast der Vorlaufachse 10 beträgt in diesem Beispiel 7,5 t, während die angetriebene Hinterachse 2 auf einen technisch zulässigen Wert von 13 t belastet werden kann.

Wird das aus diesen Werten zugrunde gelegte Verhältnis von 1,73 (= 13 t / 7,5 t) auf die gesetzlich zulässige Höchstlast der Vorlaufachse 10 bezogen, darf die Vorlaufachse 10 nur mit 6,65 t belastet werden. Dies bedeutet einen Verlust von knapp 1 t für eine Beladung bzw. Belastung eines Nutzfahrzeugs im Hinterachsbereich. Aus diesem Grund ist eine erfindungsgemäß vorgesehene Achslastumschaltung vorgesehen.

Bis zu einem in der Steuerung hinterlegten Grenzwert von 10 t für die Achslast an der Hinterachse 2 befinden sich die Luftbälge 1 an der angetriebenen Hinterachse 2 in einer Druckreduzierstellung, die durch die entsprechende Stellung der 3/2-Wegeventile 11 und das Druckverhältnisventil 12 sicher gestellt wird. Sobald durch den an den Luftfederbälgen 1 der Hinterachse 2 vorgesehenen Druckschalter 4 festgestellt wird, dass die Achslast an der Hinterachse 2 den Grenzwert von 10 t überschreitet, werden das Wechselventil 3 und die 3/2-Wegeventile 11 an der Hinterachse 2 derart geschaltet, dass sich anschließend das technische Achslastverhältnis zwischen Hinterachslast und Vorlaufachslast aufgrund gleicher Drücke von 7,5 bar in allen Luftfederbälgen 1 an Hinter- 2 und Vorlaufachse 10 einstellt.

Hierbei wird bei Erreichen der gesetzlich zulässigen Hinterachslast das Wechselventil 3 durch das diesbezüglich vom Druckschalter 4 initiierte Signal aktiviert und lässt dann das Zuführen von Schaltluft von der Druckluftquelle her über die Steuerleitung 7 zu den beiden 3/2-Wegeventilen 11 zu. Hierdurch werden diese synchron von ihrer vorherigen Druckreduzierstellung in ihre Volldurchlaststellung umgeschaltet. Bedingt durch das Schalten der 3/2-Wegeventile 11 werden die Druckverhältnisventile 12 an der Hinterachse strömungstechnisch umgangen und eine durchgängige Verbindung zwischen dem Magnetventilblock 13 und den beiden Luftfederbälge 1 je Achsseite geschaffen.

Die erfindungsgemäße technische Lösung stellt somit eine Weiterbildung eines bekannten Verfahrens zur Verstellung des Achslastverhältnisses bei luftgefederten Nutzfahrzeugen dar, mit dem einerseits auf verhältnismäßig einfache Weise eine Umschaltung des Achslastverhältnisse realisiert wird und andererseits sichergestellt ist, dass der beim Ausschalten der Zündung des Fahrzeugs der in der Steuerleitung des Wechselventils herrschende Druck und somit das bei Ausschalten der Zündung herrschende Achslastverhältnis beibehalten wird.

### Bezugszeichenliste

- 1: Luftfederbalg
- 2: Hinterachse
- 3: Wechselventil
- 4: Druckschalter
- 5: erstes Magnetventil
- 6: zweites Magnetventil
- 7: Steuerleitung
- 8: Wechselrelais
- 9: Vorratsdruckluftkreis
- 10: Vorlaufachse
- 11: 3/2-Wegeventil
- 12: Druckverhältnisventil
- 13: Magnetventilblock

## Patentansprüche

1. Luftfederung eines Nutzfahrzeugs, das über eine luftgefederte, angetriebene Hinterachse (2) und eine dieser zugeordnete Vor- und/oder Nachlaufachse (10) verfügt, die jeweils wenigstens einen Druckluftkreis mit zumindest einem Luftfederbalg (1) aufweisen, wobei zumindest ein Druckschalter (4) zur Erfassung eines Balgdrucks an der angetriebenen Hinterachse (2), wenigstens ein der Hinterachse (2) zugeordnetes pneumatisch über ein Wechselventil (3) mit Steuerleitung (7) schaltbares 3/2-Wegeventil (11), an das wenigstens ein Druckverhältnisventil (12) der Hinterachse (2) angeschlossen ist, sowie eine Steuereinheit vorgesehen und derart ausgeführt sind, dass in Abhängigkeit des erfassten Balgdrucks ein Achslastverhältnis zwischen der angetriebenen Hinterachse (2) und einer dieser zugeordneten Vor- und/oder Nachlaufachse (10) veränderbar ist,
**dadurch gekennzeichnet, dass** an die Steuerleitung (7) des Wechselventils (3) zwei Magnetventile (5, 6) parallel angeschlossen sind, die durch mit elektrischer Energie versorgbare Wechselrelais (8) in Abhängigkeit des an der Hinterachse (2) erfassten Balgdrucks derart schaltbar sind, dass durch einen Schaltvorgang die Steuerleitung (7) beoder entlüftbar ist.

2. Luftfederung nach Anspruch 1,
**dadurch gekennzeichnet, dass** in Abhängigkeit des an der Hinterachse (2) erfassten Balgdrucks wahlweise jeweils eines der beiden Magnetventile (5, 6) über das Wechselrelais (8) mit elektrischer Energie versorgbar ist.

3. Luftfederung nach Anspruch 1 oder 2,
**dadurch gekennzeichnet, dass** eines der beiden Magnetventile (5) an einen Vorratsdruckluftkreis (9) angeschlossen ist.

4. Luftfederung nach einem der Ansprüche 1 bis 3,
**dadurch gekennzeichnet, dass** durch eines der beiden Magnetventile (5) eine Verbindung zwischen einem Vorratsdruckluftkreis (9) und der Steuerleitung (7) herstellbar ist.

5. Luftfederung nach einem der Ansprüche 1 bis 4,
**dadurch gekennzeichnet, dass** die Steuerleitung (7) über eines der beiden Magnetventile (6) entlüftbar ist.

6. Luftfederung nach einem der Ansprüche 1 bis 5,
**dadurch gekennzeichnet, dass** die Magnetventile (5, 6) derart verschaltet sind, dass sobald keines der beiden Magnetventile (5, 6) mit elektrischer Energie versorgt wird, die Steuerleitung (7) weder mit einem Vorratsdruckluftkreis (9) verbunden noch entlüftet ist

7. Luftfederung nach einem der Ansprüche 1 bis 6,
**dadurch gekennzeichnet, dass** die Magnetventile (5, 6) derart verschaltet sind, dass sobald keines der beiden Magnetventile (5, 6) mit elektrischer Energie versorgt wird, ein zu diesem Zeitpunkt in der Steuerleitung (3) herrschender Steuerdruck bei Ausschalten der Zündung beibehalten wird.

8. Luftfederung nach einem der Ansprüche 1 bis 7,
**dadurch gekennzeichnet, dass** die Steuereinheit derart ausgeführt ist, dass bei Erreichen einer Achslast an der Hinterachse von 10 t eine Umschaltung des Achslastverhältnisses erfolgt.

9. Verwendung einer Luftfederung nach einem der vorangegangenen Ansprüche in einer Schwerlastzugmaschine.

## Claims

1. A pneumatic suspension system of a utility vehicle which has a driven rear axle (2) with pneumatic suspension and a leading and/or trailing axle (10) which is assigned thereto, which each have at least one compressed air circuit with at least one pneumatic spring bellows (1), wherein at least one pressure switch (4) for sensing a bellows pressure at the driven rear axle (2), at least one 3/2 way valve (11) which is assigned to the rear axle (2), can be switched pneumatically by means of a shuttle valve (3) with a control line (7) and to which at least one pressure ratio valve (12) of the rear axle (2) is connected, and a control unit are provided and are embodied in such a way that an axle load ratio between the driven rear axle (2) and a leading and/or trailing axle (10) assigned thereto can be varied as a function of the sensed bellows pressure,
**characterized in that** two solenoid valves (5, 6) are connected in parallel to the control line (7) of the shuttle valve (3) and can be switched, as a function of the bellows pressure sensed at the rear axle (2), by changeover relays (8) which can be supplied with electrical energy, in such a way that the control line (7) can be ventilated or vented by means of a switching process.

2. The pneumatic suspension system according to Claim 1,
**characterised in that** in each case one of the two solenoid valves (5, 6) can be optionally supplied with electrical energy via the changeover relay (8) as a function of the bellows pressure sensed at the rear axle (2).

3. The pneumatic suspension system according to Claim 1 or 2,
**characterized in that** one of the two solenoid valves (5) is connected to a compressed air supply circuit (9).

4. The pneumatic suspension system according to one of Claims 1 to 3,
**characterized in that** a connection between a compressed air supply circuit (9) and the control line (7) can be brought about by means of one of the two solenoid valves (5).

5. The pneumatic suspension system according to one of Claims 1 to 4,
**characterized in that** the control line (7) can be vented via one of the two solenoid valves (6).

6. The pneumatic suspension system according to one of Claims 1 to 5,
**characterized in that** the solenoid valves (5, 6) are connected in such a way that as soon as neither of the two solenoid valves (5, 6) is supplied with electrical energy, the control line (7) is neither connected to a compressed air supply circuit (9) nor vented.

7. The pneumatic suspension system according to one of Claims 1 to 6,
**characterized in that** the solenoid valves (5, 6) are connected in such a way that as soon as neither of the two solenoid valves (5, 6) is supplied with electrical energy, a control pressure prevailing in the control line (3) at this time is maintained when the ignition is switched off.

8. The pneumatic suspension system according to one of Claims 1 to 7,
**characterized in that** the control unit is embodied in such a way that when an axle load at the rear axle of 10 t is reached, the axle load ratio is switched over.

9. The use of a pneumatic suspension system according to one of the preceding claims in a heavy haulage tractor.

## Revendications

1. Ressort pneumatique d'un véhicule utilitaire, qui dispose d'un essieu arrière entraîné (2) à suspension pneumatique et d'un essieu avant et/ou suiveur (10) associé à celui-ci, qui présentent chacun au moins un circuit d'air comprimé avec au moins un soufflet pneumatique (1), au moins un commutateur de pression (4) pour détecter une pression de soufflet au niveau de l'essieu arrière entraîné (2), au moins une soupape à 3/2 voies (11) associée à l'essieu arrière (2) et pouvant être commutée pneumatiquement par le biais d'une soupape d'échange (3) avec une conduite de commande (7), au niveau de laquelle soupape est raccordée au moins une soupape de rapport de pression (12) de l'essieu arrière (2), et une unité de commande étant prévus et réalisés de telle sorte qu'en fonction de la pression de soufflet détectée, un rapport de charge d'essieu entre l'essieu arrière entraîné (2) et un essieu avant et/ou suiveur (10) associé à celui-ci puisse être modifié,
**caractérisé en ce que** deux électrovannes (5, 6) sont raccordées en parallèle au niveau de la conduite de commande (7) de la soupape d'échange (3), lesquelles peuvent être commutées par des relais d'échange (8) pouvant être alimentés en énergie électrique en fonction de la pression de soufflet détectée au niveau de l'essieu arrière (2), de telle sorte que la conduite de commande (7) puisse être ventilée ou désaérée par une opération de commutation.

2. Ressort pneumatique selon la revendication 1, **caractérisé en ce qu'**en fonction de la pression de soufflet détectée au niveau de l'essieu arrière (2), à chaque fois l'une des deux électrovannes (5, 6) peut être alimentée en énergie électrique de manière sélective par le biais du relais d'échange (8).

3. Ressort pneumatique selon la revendication 1 ou 2, **caractérisé en ce que** l'une des deux électrovanne (5) est raccordée à un circuit d'air sous pression de réserve (9).

4. Ressort pneumatique selon l'une quelconque des revendications 1 à 3,
**caractérisé en ce qu'**une connexion entre un circuit d'air sous pression de réserve (9) et la conduite de commande (7) peut être établie par l'une des deux électrovannes (5).

5. Ressort pneumatique selon l'une quelconque des revendications 1 à 4,
**caractérisé en ce que** la conduite de commande (7) peut être désaérée par le biais de l'une des deux électrovannes (6).

6. Ressort pneumatique selon l'une quelconque des revendications 1 à 5,
**caractérisé en ce que** les électrovannes (5, 6) sont branchées de telle sorte que dès qu'aucune des deux électrovannes (5, 6) n'est plus alimentée en énergie électrique, la conduite de commande (7) ne soit ni connectée à un circuit d'air sous pression de réserve (9) ni désaérée.

7. Ressort pneumatique selon l'une quelconque des revendications 1 à 6,
**caractérisé en ce que** les électrovannes (5, 6) sont branchées de telle sorte que dès qu'aucune des deux électrovannes (5, 6) n'est plus alimentée en énergie électrique, une pression de commande à la coupure de l'allumage, régnant à cet instant dans la conduite de commande (3), soit conservée.

8. Ressort pneumatique selon l'une quelconque des revendications 1 à 7,
**caractérisé en ce que** l'unité de commande est réalisée de telle sorte qu'à l'obtention d'une charge d'essieu de 10 tonnes sur l'essieu arrière, une commutation du rapport de charge d'essieu se produise.

9. Utilisation d'un ressort pneumatique selon l'une quelconque des revendications précédentes dans un tracteur routier de gros tonnage.
